(19) Europäisches Patentamt
European Patent Office
Office européen des brevets

(11) **EP 2 462 081 B1**

(12) **FASCICULE DE BREVET EUROPEEN**

(45) Date de publication et mention
de la délivrance du brevet:
**08.10.2014 Bulletin 2014/41**

(21) Numéro de dépôt: **10747292.0**

(22) Date de dépôt: **04.08.2010**

(51) Int Cl.:
***C04B 35/119*** (2006.01)    ***C04B 35/653*** (2006.01)

(86) Numéro de dépôt international:
**PCT/IB2010/053528**

(87) Numéro de publication internationale:
**WO 2011/015995 (10.02.2011 Gazette 2011/06)**

(54) **GRAINS D'ALUMINE-ZIRCONE FONDUS**

GESCHMOLZENE ALUMINA-ZIRKONIA KÖRNER

FUSED ALUMINA-ZIRCONIA GRAINS

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **05.08.2009 FR 0955513**

(43) Date de publication de la demande:
**13.06.2012 Bulletin 2012/24**

(73) Titulaire: **Saint-Gobain Centre de Recherches et
d'Etudes
Européen
92400 Courbevoie (FR)**

(72) Inventeurs:
• **MARLIN, Samuel**
  **F-13750 Plan d'Orgon (FR)**
• **LANGOHR, David**
  **F-84800 Lagnes (FR)**
• **PETIGNY, Sylvain**
  **F-84740 Velleron (FR)**

(74) Mandataire: **Sartorius, Jérôme
Cabinet Nony
3, rue de Penthièvre
75008 Paris (FR)**

(56) Documents cités:
**JP-A- 59 227 726    US-A- 4 457 767**

**Description**

**Domaine technique**

La présente invention concerne un grain céramique fondu, notamment pour des applications comme grains abrasifs. L'invention concerne également un mélange desdits grains ainsi qu'un outil abrasif comportant un mélange de grains conforme à l'invention.

**Art antérieur**

On classe généralement les outils abrasifs selon le mode de mise en forme des grains céramiques qui les constituent : abrasifs libres (utilisation en projection ou en suspension, sans support), abrasifs appliqués (support de type toiles ou papiers, où les grains sont disposés sur quelques couches) et abrasifs agglomérés (sous forme de meules circulaires, de bâtons, etc.). Dans ces derniers, les grains abrasifs sont pressés avec un liant organique ou vitreux (en ce cas, un liant constitué d'oxydes, essentiellement silicaté). Ces grains doivent présenter eux-mêmes de bonnes propriétés mécaniques à l'abrasion (ténacité notamment), et donner lieu à une bonne cohésion mécanique avec le liant (solidité de l'interface). On trouve aujourd'hui différentes familles de grains abrasifs permettant de couvrir une large gamme d'applications et de performance : les grains d'oxydes synthétisés par fusion en particulier offrent un excellent compromis qualité / coût de fabrication.

Les grains abrasifs à base d'alumine habituellement utilisés dans la fabrication de meules ou de bandes abrasives regroupent trois catégories principales selon le type d'applications et de régimes d'abrasion rencontrés : les grains fondus à base d'alumine, les grains fondus à base d'alumine-zircone et les grains à base d'alumine obtenus par le procédé Sol-Gel.

Dans la gamme des grains fondus, les matériaux à base d'alumine et de zircone sont connus depuis US-A-3,181,939. Ces grains sont généralement composés de 10 à 60% de zircone, de 0 à 10% d'un additif, le complément étant l'alumine. Comme additif, on connaît l'oxyde d'yttrium, ajouté jusqu'à 2% selon US-A-4,457,767 ou l'oxyde de titane ajouté jusqu'à 10% selon le brevet DE-C1-4306966. Ces additifs améliorent le pouvoir abrasif des grains alumine-zircone. US 5,525,135 divulgue également des grains fondus alumine - zircone - oxyde de titane.

Enfin JP59227726 divulgue des grains fondus alumine - zircone - oxyde de titane - oxyde d'yttrium, l'oxyde d'yttrium pouvant être ajouté dans une quantité comprise entre 0,05% et 7%, de préférence entre 1 et 5% sur la base de la somme de l'alumine, de la zircone et du titane.

Dans le cas de l'usinage des aciers durs, les grains fondus à base d'alumine présentent une faible ténacité qui se traduit par un effritement excessif du grain. Les grains fondus à base d'alumine-zircone présentent une très grande ténacité associée à une plus faible dureté. Ils permettent d'usiner efficacement les aciers durs, mais tendent à développer des méplats. Il en résulte en général une élévation des forces appliquées sur la pièce abrasée, voire, selon les conditions d'utilisation, un endommagement thermique de cette pièce. Les grains à base d'alumine obtenus par le procédé Sol-Gel constituent un bon compromis. Ils présentent en effet une forte dureté, une ténacité intermédiaire leur permettant de régénérer leurs arêtes de coupe et une microstructure fine conduisant à une micro fracturation du grain assurant une longue durée de vie sur les aciers durs.

Pour l'usinage des aciers de faible dureté et ductiles comme les aciers inoxydables, les grains fondus à base d'alumine-zircone sont performants. Leur forte ténacité limite en effet leur fracturation. Les grains à base d'alumine obtenus par le procédé Sol-Gel sont en général moins performants que les grains fondus à base d'alumine-zircone, en raison de leur plus faible ténacité. Les grains fondus à base d'alumine sont les moins performants. Ils présentent en effet une faible ténacité qui conduit à un effritement excessif.

Il est habituel de mesurer et de comparer les performances abrasives de différents grains par le rapport de la masse d'acier usinée divisée par la masse de grains abrasifs consommée lors dudit usinage, appelé ici rapport S. Si ce rapport donne bien un ordre de grandeur des performances abrasives des grains, il ne prend cependant pas en compte tous les mécanismes intervenant lors de l'usinage. Par exemple, un grain consommé rapidement, du fait d'une usure rapide, et qui développe un fort enlèvement de matière peut conduire à un rapport S élevé. Pour autant, ce grain peut ne pas être suffisamment endurant pour l'usinage d'un grand nombre de pièces. Il peut aussi conduire à un endommagement thermique excessif des pièces usinées, par un phénomène de bleuissement des pièces résultant d'une puissance de coupe développée excessive mais nécessaire au maintien du régime de coupe.

Il existe donc un besoin pour un mélange de grains abrasifs fondus alumine-zircone présentant un rapport S élevé, permettant un usinage avec une puissance développée faible et ayant une durée de vie ou « endurance » élevée. Un but de l'invention est de répondre à ce besoin.

**EP 2 462 081 B1**

**Résumé de l'invention**

Selon l'invention, on atteint ce but au moyen d'un grain fondu présentant l'analyse chimique suivante, en pourcentages en poids,

| | |
|---|---|
| zrO$_2$ + HfO$_2$ : | 38,0 à 46,0% |
| Al$_2$O$_3$ : | complément à 100% |
| SiO$_2$ : | 0,20 à 0,60% |
| Y$_2$O$_3$: | 0,45 à 0,70% ; |
| TiO$_2$ : | 1,00 à 2,00% |
| autres éléments, exprimés sous la forme oxyde : | < 1,00%, |

le rapport Y$_2$O$_3$/SiO$_2$ étant compris entre 0,80 et 2,00 et la phase quadratique représentant entre 60 et 90% de la masse de la zircone, le complément étant sous la forme monoclinique.

Comme on le verra plus en détail dans la suite de la description, les inventeurs ont découvert qu'avec la composition chimique ci-dessus, en en particulier dans une plage très étroite de teneurs en oxyde d'yttrium, une proportion limitée de zircone quadratique est avantageuse. Cet enseignement est d'ailleurs contraire à celui de US 5,525,135 ou de JP59227726 qui suggèrent, voire recommandent, une proportion maximale de zircone quadratique pour augmenter l'efficacité d'usinage.

Un grain selon l'invention peut encore présenter une ou plusieurs des caractéristiques optionnelles suivantes :

- De préférence, le rapport massique Y$_2$O$_3$ / SiO$_2$ est supérieur à 1,00, de préférence supérieur à 1,10 et/ou inférieur à 1,80, de préférence inférieur à 1,50, de préférence inférieur à 1,40, de préférence encore inférieur à 1,30.
- De préférence, la zircone quadratique représente plus de 70% et/ou moins de 85% de la masse de la zircone.
- De préférence, la teneur en ZrO$_2$ est supérieure à 40%.
- De préférence, la teneur en silice est supérieure à 0,3%, de préférence supérieure à 0,35%.
- La teneur massique en oxyde de titane TiO$_2$ est supérieure à 1,30% et/ou inférieure à 1,70%.
- De préférence, les autres éléments exprimés sous la forme oxyde sont inférieurs à 0,50%. En particulier :

  MgO : < 0,30%, de préférence < 0,10%, de préférence < 0,05%, et/ou
  CaO : < 0,30%, de préférence < 0,20%, de préférence < 0,10%, et/ou
  Na$_2$O : < 0,10%, de préférence < 0,05%.

- Les autres éléments exprimés sous la forme oxyde sont des impuretés. Il est encore décrit un mélange de grains comportant, en pourcentage massique, plus de 80%, de préférence plus de 90%, de préférence plus de 95%, de préférence plus de 99%, de préférence sensiblement 100% de grains abrasifs selon l'invention. De préférence, le mélange de grains selon l'invention respecte une distribution granulométrique conforme à celles des mélanges ou « grits » mesurés selon les normes FEPA Standard 42-GB-1984, R1993 et FEPA Standard 43-GB-1984, R1993.

L'invention concerne également un outil abrasif, notamment sous la forme d'une meule ou d'une bande abrasive, comportant un mélange de grains abrasifs liés par un liant ou déposés en couche sur un support, notamment un support souple, et retenus par un liant, cet outil étant remarquable en ce que les grains sont conformes à l'invention.

De manière générale, il est décrit l'utilisation de grains selon l'invention pour abraser.

**Définitions**

- Les teneurs en oxydes d'un grain selon l'invention se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments sus-mentionnés.
- Par « impuretés », on entend les constituants inévitables, introduits nécessairement avec les matières premières. En particulier les composés faisant partie du groupe des oxydes, nitrures, oxynitrures, carbures, oxycarbures, carbonitrures et espèces métalliques de sodium et autres alcalins, fer, vanadium et chrome sont des impuretés. A titre d'exemples, on peut citer CaO, MgO ou Na$_2$O. Le carbone résiduel fait partie des impuretés de la composition des produits selon l'invention. En revanche, l'oxyde d'hafnium n'est pas considéré comme une impureté.

- Par « précurseur » d'un oxyde, on entend un constituant apte à fournir ledit oxyde lors de la fabrication d'un grain ou d'un mélange de grains selon l'invention.
- Dans un produit obtenu par fusion, $HfO_2$ n'est pas chimiquement dissociable de $ZrO_2$. Dans la composition chimique d'un tel produit, $ZrO_2+HfO_2$ désigne donc la teneur totale de ces deux oxydes. Cependant, selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources de zircone à des teneurs généralement inférieures à 2%. Par souci de clarté, on peut donc désigner indifféremment la teneur en zircone et en trace d'oxyde d'hafnium par $ZrO_2+HfO_2$ ou par $ZrO_2$, on encore par « teneur en zircone ».
- Par « grain fondu », ou plus largement « produit fondu », on entend un grain (ou produit) solide obtenu par solidification par refroidissement d'une matière en fusion.
- Une « matière en fusion » est une masse liquide qui peut contenir quelques particules solides, mais en une quantité insuffisante pour qu'elles puissent structurer ladite masse. Pour conserver sa forme, une matière en fusion doit être contenue dans un récipient.
- Dans la présente description, sauf mention contraire, toutes les compositions d'un grain sont données en pourcentages massiques, sur la base de la masse totale des oxydes du grain.

Les grains fondus selon l'invention peuvent être fabriqués selon tout procédé conventionnel de fabrication de grains d'alumine-zircone. Un procédé conventionnel comprend classiquement les étapes suivantes : mélange des matières premières, fusion dans un four à arc électrique, solidification par trempe du liquide en fusion, broyage et optionnellement classification selon la granulométrie nécessaire.

Les propriétés des mélanges de grains d'alumine-zircone fondus sont liées à la thermique du liquide en fusion, qui elle-même dépend des paramètres de procédé, mais aussi fortement de la géométrie du four ainsi que de son environnement (collecte des fumées, matériaux, etc.). Les valeurs des paramètres du procédé sont donc déterminées en fonction du four mis en oeuvre, des matières premières utilisées, etc., de manière à obtenir un mélange de grains conforme à l'invention à la fin de ces étapes. Les paramètres peuvent par exemple prendre les valeurs du procédé utilisé pour les exemples ci-dessous.

## Exemples

Les exemples non limitatifs suivants sont donnés dans le but d'illustrer l'invention.

Les produits donnés en exemples ont été élaborés à partir des matières premières suivantes :

- Poudre d'alumine commercialisée sous la dénomination AR75 par la société ALCAN, présentant une teneur en soude inférieure à 0,4% ;
- Poudre de zircone à teneur moyenne en zircone + hafnium supérieure à 85%, contenant 5% en moyenne de silice, une teneur en alumine inférieure à 10% et une teneur en autres éléments inférieure à 0,7%;
- Poudre d'oxyde d'yttrium commercialisée sous l'appellation « Yttrium Oxyde 99,99 LY » par la société Altichem, à teneur en $Y_2O_3 > 99,99\%$ et présentant un diamètre médian compris entre 3 et 6 microns ;
- Poudre de titane « Rutile sand » commercialisée par Europe Minerals, présentant une teneur en $TiO_2 > 95\%$, et un diamètre médian de l'ordre de 125 microns ;
- Coke de pétrole commercialisé par Solutia Incorporated, de taille comprise entre 1 et 4 mm.

Les grains ont été préparés suivant le procédé classique suivant bien connu de l'homme de l'art :

a') mélange des matières premières, avec un ajout d'au moins 0,5% (jusqu'à 3%) de coke de pétrole selon l'état du four,

b') fusion dans un four à arc électrique monophasé de type Héroult à électrodes en graphite, avec une cuve de four de 0,8 m de diamètre, une tension de 105-150V, une intensité de 1500 à 2500 A et une énergie électrique spécifique fournie de 2,1 à 2,8 kWh/kg chargé,

c') refroidissement brutal de la matière en fusion au moyen d'un dispositif de coulée entre plaques minces métalliques tel que celui présenté dans le brevet US-A-3,993,119, de manière à obtenir une plaque entièrement solide, constituant une masse solide,

d') broyage de ladite masse solide refroidie à l'étape c') de manière à obtenir un mélange de grains,

e') sélection par tamisage des grains compris entre 500 et 600 $\mu$m.

Afin d'évaluer la performance et la durée de vie des mélanges de grains, des meules de diamètre 12,7 cm, contenant 1 gramme de grains de chaque exemple, ont été réalisées.

Des plaques en acier inoxydable 304, de dimensions 20,3 cm x 7,6 cm x 5,1 cm, ont ensuite été usinées en surface avec ces meules, avec un mouvement de va et vient à vitesse constante en maintenant une profondeur de coupe constante de 12,7 $\mu$m et une vitesse de rotation de la meule de 3600 tr/min. La puissance maximale développée par la meule pendant l'usinage, $P_{max}$ a été enregistrée.

Après usure complète de la meule, on a mesuré la masse d'acier usinée (c'est-à-dire la masse d'acier enlevée par l'opération de meulage) « Ma » et la masse de meule consommée « Mm ». Le rapport S est égal au rapport Ma/Mm.

L'efficacité de coupe est déterminée en mesurant la puissance maximale développée par la meule lors du test d'usinage, $P_{max}$, et la durée de vie de la meule $t_{max}$, la vie d'une meule étant considérée comme achevée lorsque tous les grains de la meule ont été consommés.

Le tableau 1 fournit la composition chimique et la proportion de zircone quadratique de différents mélanges de grains testés. Le tableau 2 fournit les résultats obtenus avec ces mélanges.

Le pourcentage d'amélioration du rapport S est calculé par la formule suivante : 100.(rapport S du produit de l'exemple considéré - rapport S du produit de l'exemple de référence) / rapport S du produit de l'exemple de référence, l'exemple de référence étant l'exemple comparatif 1* ou l'exemple comparatif 2*. Une valeur positive et élevée du pourcentage d'amélioration du rapport S est recherchée.

Le pourcentage de réduction de la puissance maximale développée par la meule lors du test, $P_{max}$, est calculé par la formule suivante :

$$100.(P_{max} \text{ avec le produit de l'exemple de référence} - P_{max} \text{ avec le produit de l'exemple considéré) /}$$

$P_{max}$ du produit de l'exemple de référence, l'exemple de référence étant l'exemple comparatif 1* ou l'exemple comparatif 2*. Une valeur positive et élevée du pourcentage de réduction de la puissance maximale développée par la meule lors du test $P_{max}$ est recherchée.

Le pourcentage d'amélioration de la durée de vie de la meule, $t_{max}$, est calculé par la formule suivante :

$$100.(t_{max} \text{ du produit de l'exemple considéré} - t_{max} \text{ du produit de l'exemple de référence) / } t_{max} \text{ du}$$

produit de l'exemple de référence, l'exemple de référence étant l'exemple comparatif 1* ou l'exemple comparatif 2*. Une valeur positive et élevée du pourcentage d'amélioration de la durée de vie de la meule, $t_{max}$ est recherchée.

Le pourcentage massique de zircone quadratique dans la zircone est déterminé de la manière suivante : Les grains à tester sont enrobés dans une résine de manière à constituer une pastille. Un diagramme de diffraction X est acquis, à l'aide d'un diffractomètre D5000 avec anticathode en cuivre de la société Bruker, sur une section polie de la pastille présentant de plus de 600 grains. L'acquisition est réalisée sur un domaine angulaire $2\theta$ compris entre 25° et 37°, avec un pas de 0,02° et un temps de 4 secondes par pas. Une fente de réception de 0,6 mm est utilisée, l'échantillon étant maintenu en rotation sur lui-même afin de limiter les effets d'orientations préférentielles. Le temps d'acquisition est multiplié par 5 pour une meilleure statistique de comptage.

Le pourcentage massique de zircone monoclinique est mesurée à partir du rapport des aires des pics (111) et (111) de la zircone monoclinique et du pic (111) de la zircone stabilisée selon la formule suivante, après traitement de déconvolution à l'aide du logiciel TOPAS P, la fonction de déconvolution étant une pseudo-voigt :

$$\%Zircone\ Monoclinique = \frac{100.\rho_{Mono}.1.311Aire_{Mono}}{\rho_{Mono}.1.311Aire_{Mono} + \rho_{Stab}.Aire_{Stab}}$$

$\rho_{Mono}$ étant la densité de la zircone monoclinique, égale à 5,8 g/cm³, et $\rho_{Stab}$ étant la densité de la zircone stabilisée, égale à 6,1 g/cm³.

Le pourcentage massique de la zircone stabilisée est donné par la formule suivante :

$$\%\ Zircone\ Stabilisée = 100 - \%\ Zircone\ monoclinique$$

Dans les grains selon l'invention testés, la zircone stabilisée est entièrement sous la forme cristallographique quadratique, le complément étant de la zircone sous la forme cristallographique monoclinique.

Les pourcentages de zircone quadratique sont exprimés par rapport à la zircone totale cristallisée.

Les tableaux 1 et 2 suivants résument les résultats obtenus.

L'exemple comparatif 1* est un grain dont la composition est proche de celle de l'exemple 5 de JP5922772, et l'exemple comparatif 2* est un grain selon US 4,457,767.

Tableau 1

| Exemple | ZrO$_2$+HfO$_2$ (%) | Al$_2$O$_3$ (%) | SiO$_2$ (%) | TiO$_2$ (%) | Y$_2$O$_3$ (%) | Na$_2$O (%) | MgO (%) | CaO (%) | Autres (%) | Y$_2$O$_3$/SiO$_2$ | Zircone quadratique (%) |
|---|---|---|---|---|---|---|---|---|---|---|---|
| 1* | 42,7 | Complément à 100% | 0,1 | 1,16 | 0,85 | <0,05 | <0,05 | 0,06 | 0,12 | 8,5 | 100 |
| 2* | 38,5 | Complément à 100% | 0,30 | 0,12 | 0,80 | <0,05 | 0,08 | 0,07 | 0,07 | 2,66 | 87 |
| 3 | 40,6 | Complément à 100% | 0,50 | 1,53 | 0,67 | <0,05 | <0,05 | 0,04 | 0,25 | 1,34 | 76 |
| 4 | 41,7 | Complément à 100% | 0,39 | 1,54 | 0,57 | <0,05 | <0,05 | 0,05 | 0,23 | 1,46 | 85 |
| 5 | 42,5 | Complément à 100% | 0,40 | 1,56 | 0,54 | <0,05 | <0,05 | 0,05 | 0,24 | 1,35 | 87 |
| 6 | 38,4 | Complément à 100% | 0,57 | 1,49 | 0,57 | <0,05 | <0,05 | 0,06 | 0,28 | 1,00 | 74 |
| 7 | 42 | Complément à 100% | 0,58 | 1,48 | 0,53 | <0,05 | <0,05 | 0,04 | 0,15 | 0,91 | 65 |
| 8 | 42,2 | Complément à 100% | 0,58 | 1,51 | 0,57 | <0,05 | <0,45 | 0,06 | 0,20 | 0,98 | 67 |
| 9** | 37,7 | Complément à 100% | 0,66 | 1,51 | 0,57 | <0,05 | <0,05 | 0,04 | 0,27 | 0,86 | 72 |
| 10** | 39,5 | Complément à 100% | 0,18 | 1,11 | 0,43 | <0,05 | <0,05 | 0,05 | 0,24 | 2,39 | 91 |
| 11 | 38,1 | Complément à 100% | 0,6 | 1,54 | 0,59 | <0,05 | <0,05 | 0,06 | 0,30 | 0,98 | 64 |
| 12** | 40,9 | Complément à 100% | 0,53 | 0,71 | 0,4 | <0,05 | <0,05 | 0,05 | 0,25 | 0,75 | 57 |
| 13** | 42,6 | Complément à 100% | 0,52 | 3,21 | 0,3 | <0,05 | <0,05 | 0,04 | 0,26 | 0,58 | 78 |
| 14** | 39,7 | Complément à 100% | 0,53 | 0,68 | 0,42 | <0,05 | <0,05 | 0,05 | 0,1 | 0,79 | 55 |
| 15 | 41,3 | Complément à 100% | 0,59 | 1,59 | 0,5 | <0,05 | <0,05 | 0,05 | 0,29 | 0,85 | 71 |
| 16 | 43,4 | Complément à 100% | 0,44 | 1,62 | 0,53 | <0,05 | <0,05 | 0,04 | 0,26 | 1,20 | 79 |
| 17 | 45,3 | Complément à 100% | 0,38 | 1,61 | 0,49 | <0,05 | <0,05 | 0,04 | 0,27 | 1,29 | 74 |

** : Exemples hors invention

* : Exemples comparatifs (hors invention)

Tableau 2

| Exemple | Rapport S | | P_max | | t_max | |
|---|---|---|---|---|---|---|
| | % d'amélioration / exemple 1* | % d'amélioration / exemple 2* | % de réduction / exemple 1* | %de réduction / exemple 2* | % d'amélioration / exemple 1* | % d'amélioration / exemple 2* |
| 1* | - | - | - | - | - | - |
| 2* | - | - | - | - | - | - |
| 3 | 34 | 39 | 12 | 13 | 24 | 26 |
| 4 | 18 | 22 | 6 | 7 | 19 | 20 |
| 5 | 28 | 33 | 21 | 22 | 25 | 27 |
| 6 | 14 | 19 | 6 | 7 | 23 | 25 |
| 7 | 15 | 19 | 17 | 18 | 20 | 22 |
| 8 | 16 | 21 | 23 | 24 | 17 | 19 |
| 9** | 2 | 6 | 2 | 3 | 7 | 9 |
| 10** | 6 | 9 | 3 | 4 | 10 | 12 |
| 11 | 10 | 15 | 15 | 16 | 17 | 19 |
| 12** | -3 | 1 | -16 | -14 | -4 | -3 |
| 13** | 7 | 13 | 19 | 20 | 0 | 1 |
| 14** | 6 | 10 | -5 | -3 | 8 | 10 |
| 15 | 27 | 32 | 17 | 18 | 15 | 17 |
| 16 | 29 | 35 | 20 | 21 | 18 | 20 |
| 17 | 31 | 36 | 20 | 21 | 24 | 25 |

Les inventeurs considèrent qu'il existe un bon compromis entre le rapport S, la puissance maximale développée par la meule lors du test d'usinage, $P_{max}$, et la durée de vie de la meule $t_{max}$ lorsque :

- le rapport S est amélioré d'au moins 10% par rapport aux produits des exemples de référence, et
- la puissance maximale développée, $P_{max}$, est réduite d'au moins 5% par rapport aux produits des exemples de référence, et
- la durée de vie de la meule, $t_{max}$, est améliorée d'au moins 6% par rapport aux produits des exemples de référence.

De préférence, le rapport S est amélioré d'au moins 15%, de préférence d'au moins 20%, de préférence d'au moins 25%, voire d'au moins 30% et/ou la puissance maximale développée, $P_{max}$, est réduite d'au moins 10%, de préférence d'au moins 15%, voire d'au moins 20% et/ou la durée de vie de la meule, $t_{max}$, est améliorée d'au moins 10%, de préférence d'au moins 15%, voire d'au moins 20%.

L'exemple 10 montre qu'une teneur en zircone quadratique de 91% de la masse de la zircone.ne permet pas de respecter le compromis recherché.

Les exemples 12 et 14 montrent qu'une teneur en zircone quadratique de 57% et de 55% de la masse de la zircone, respectivement, n'est pas suffisante pour respecter le compromis recherché.

L'exemple 11 montre qu'une teneur en zircone quadratique de 64% de la masse de la zircone permet de respecter ledit compromis.

L'exemple 9 montre qu'une teneur en silice de 0,66% est trop importante et ne permet pas de respecter ledit compromis. L'exemple 10 montre qu'une teneur en silice inférieure à 0,20% ne permet pas de respecter ledit compromis.

L'exemple 13 montre que malgré des teneurs en zircone quadratique et en silice adaptées, le compromis n'est pas respecté si la teneur en oxyde d'yttrium est inférieure à 0,45% et si la teneur en $TiO_2$ est supérieure à 2%.

Les exemples 10, 12, et 14 montrent qu'un rapport $Y_2O_3/SiO_2$ inférieur à 0,80 et supérieur à 2,00 ne permet pas le respect du compromis.

L'exemple 17 est l'exemple préféré d'entre tous.

Comme cela apparaît clairement à présent, l'invention fournit un mélange de grains abrasifs fondus alumine - zircone présentant une performance abrasive, une endurance et une efficacité de coupe exceptionnelles.

Bien entendu, la présente invention n'est cependant pas limitée aux modes de réalisation décrits et représentés fournis à titre d'exemples illustratifs et non limitatifs.

## Revendications

1. Grain fondu présentant l'analyse chimique suivante, en pourcentages en poids,

| | |
|---|---|
| $ZrO_2 + HfO_2$ : | 38,0 à 46,0% |
| $Al_2O_3$ : | complément à 100% |
| $SiO_2$ : | 0,20 à 0,60% |
| $Y_2O_3$ : | 0,45 à 0,70% |
| $TiO_2$ : | 1,00 à 2,00% |
| autres éléments, exprimés sous la forme oxyde : | < 1,00%, |

le rapport $Y_2O_3/SiO_2$ étant compris entre 0,80 et 2,00, et
la phase quadratique représentant entre 60 et 90% de la masse de la zircone, le complément étant sous la forme monoclinique.

2. Grain selon l'une quelconque des revendications précédentes, dans lequel le rapport massique $Y_2O_3 / SiO_2$ est supérieur à 1,00 et inférieur à 1,80.

3. Grain selon l'une quelconque des revendications précédentes, dans lequel la teneur en $ZrO_2$ est supérieure à 40,0%.

4. Grain selon l'une quelconque des revendications précédentes, dans lequel la teneur en silice est supérieure à 0,35%.

5. Grain selon l'une quelconque des revendications précédentes, dans lequel le rapport $Y_2O_3 / SiO_2$ est supérieur à 1,10 et inférieur à 1,30.

6. Grain selon l'une quelconque des revendications précédentes, dans lequel la teneur massique en oxyde de titane $TiO_2$ est supérieure à 1,30% et inférieure à 1,70%.

7. Grain selon l'une quelconque des revendications précédentes, dans lequel la zircone quadratique représente plus de 70% et moins de 85% de la masse de la zircone.

8. Grain selon l'une quelconque des revendications précédentes, dans lequel les autres oxydes sont inférieurs à 0,50%.

9. Grain selon l'une quelconque des revendications précédentes, dans lequel
MgO : < 0,30%, et/ou
CaO : < 0,30%, et/ou
$Na_2O$ : < 0,10%.

10. Grain selon la revendication précédente, dans lequel
MgO : < 0,10%, et/ou
CaO : < 0,20%, et/ou
$Na_2O$ : < 0,05%.

11. Outil abrasif comportant un mélange de grains selon l'une quelconque des revendications précédentes, lesdits grains étant liés par un liant ou déposés en couche sur un support souple, et retenus par un liant.

12. Outil selon la revendication précédente sous la forme d'une meule ou d'une bande abrasive.

**Patentansprüche**

1. Geschmolzenes Korn, welches in Gewichtsprozenten folgende chemische Analyse aufweist,

$ZrO_2 + HfO_2$:    38,0 bis 46,0%
$Al_2O_3$    vervollständigend zu 100%
$SiO_2$ :    bis 0,60%
$Y_2O_3$ :    0,45 bis 0,70%
$TiO_2$ :    1,00 bis 2,00%

andere Elemente, die in oxydischer Form vorliegen: <1,00%, wobei das Verhältnis $Y_2O_3/SiO_2$ zwischen 0,80 und 2,00 liegt, und die quadratische Phase sich zwischen 60 und 90% der Zirkonoxidmasse darstellt wobei die Ergänzung in monoklinischer Form vorliegt.

2. Korn nach dem vorhergehenden Anspruch, in welchem das Massenverhältnis $Y_2O_3/SiO_2$ größer als 1,00 und kleiner als 1,80 ist.

3. Korn nach einem der vorhergehenden Ansprüche, in welchem der Gehalt an $ZrO_2$ größer als 40,0% ist.

4. Korn nach einem der vorhergehenden Ansprüche, in welchem der Gehalt an Siliciumdioxyd größer als 0,35% ist.

5. Korn nach einem der vorhergehenden Ansprüche, in welchem das Verhältnis $Y_2O_3/SiO_2$ größer als 1,10 und kleiner als 1,30 ist.

6. Korn nach einem der vorhergehenden Ansprüche, in welchem der Massengehalt an Titanoxid $TiO_2$ größer als 1,30% und kleiner als 1,70% ist.

7. Korn nach einem der vorhergehenden Ansprüche, in welchem das quadratische Zirkonoxyd mehr als 70% und weniger als 85% der Zirkonoxydmasse darstellt.

8. Korn nach einem der vorhergehenden Ansprüche, in welchem die anderen Oxyde weniger als 0,50% ausmachen.

9. Korn nach einem der vorhergehenden Ansprüche, in welchem
MgO: <0,30%, und/oder
<0,30%, und/oder
$Na_2O$: <0,10% beträgt.

10. Korn nach dem vorhergehenden Anspruch, in welchem
MgO: <0,10%, und/oder
CaO: <0,20%, und/oder
$Na_2O$: <0,05% beträgt.

11. Schleifwerkzeug mit einer Mischung von Körnern gemäß einem der vorhergehenden Ansprüche, wobei die Körner mittels eines Bindemittels gebunden oder als Schicht auf einem Trägerkörper aufgebracht und mittels eines Bindemittels festgehalten sind.

12. Werkzeug nach dem vorhergehenden Anspruch in Form eines Schleifsteins oder eines Schleifbandes.

**Claims**

1. A fused grit having the following chemical composition, in percentages by weight:

$ZrO_2+HfO_2$ :    38.0 to 46.0%
$Al_2O_3$ :    balance to 100%
$SiO_2$ :    0.20 to 0,60%

(continued)

| | |
|---|---|
| $Y_2O_3$ : | 0.45 to 0,70% |
| $TiO_2$ : | 1.00 to 2.00% |

other elements, expressed in oxide form: < 1.00%,
the $Y_2O_3/SiO_2$ ratio being between 0.80 and 2.00, and
the tetragonal phase representing between 60 and 90% of the mass of zirconia, the remainder being in the monoclinic form.

2. The grit as claimed in any one of the preceding claims, in which the $Y_2O_3$ / $SiO_2$ ratio is greater than 1.00 and less than 1.80.

3. The grit as claimed in of the preceding claims, in which the $ZrO_2$ content is greater than 40.0%.

4. The grit as claimed in any one of the preceding claims, in which the silica content is greater than 0.35%.

5. The grit as claimed in any one of the preceding claims, in which the $Y_2O_3$ / $SiO_2$ ratio is greater than 1.10 and less than 1.30.

6. The grit as claimed in any one of the preceding claims, in which the mass content of titanium oxide $TiO_2$ is greater than 1.30% and less than 1.70%.

7. The grit as claimed in any one of the preceding claims, in which the tetragonal zirconia represents more than 70% but less than 85% of the mass of zirconia.

8. The grit as claimed in any one of the preceding claims, in which the other oxides are less than 0.50%.

9. The grit as claimed in any one of the preceding claims, in which:

    MgO : < 0.30%, and/or
    CaO : < 0.30%, and/or
    $Na_2O$ : < 0.10%.

10. The grit as claimed in the preceding claim, in which:

    MgO : < 0.10%, and/or
    CaO : < 0.20%, and/or
    $Na_2O$ : < 0.05%.

11. An abrasive tool comprising grit mixture as claimed in any one of the preceding claims, said grits being bound together by a binder or deposited as a layer on a flexible backing, and retained by a binder.

12. The tool as claimed in the preceding claim, in the for of a grinding wheel or an abrasive belt.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3181939 A
- US 4457767 A
- DE 4306966 C1
- US 5525135 A
- JP 59227726 B
- US 3993119 A
- JP 5922772 B